# EUROPÄISCHE PATENTSCHRIFT

(11) **EP 2 066 099 B1**
(45) Veröffentlichungstag und Bekanntmachung des Hinweises auf die Patenterteilung: **24.06.2015**
(21) Anmeldenummer: 08015761.3
(22) Anmeldetag: 08.09.2008
(51) Int. Cl.: H04L 29/08, H04L 29/06

(54) **Verfahren zur Datensynchronisation und mobiles Telekommunikationsendgerät**
Method for synchronising files and mobile telecommunications terminals
Procédé de synchronisation de données et appareil de télécommunication mobile

(30) Priorität: 30.11.2007 DE 102007058142
(43) Veröffentlichungstag der Anmeldung: 03.06.2009
(73) Patentinhaber: Deutsche Telekom AG, 53113 Bonn (DE)
(72) Erfinder: Egerter, Martin, 52146 Würselen (DE)
(74) Vertreter: Blumbach Zinngrebe

(56) Entgegenhaltungen:
- EP-A2- 0 917 077
- WO-A1-00/20994
- US-A1- 2006 075 227
- US-A1- 2006 089 121

## Beschreibung

Die Erfindung betrifft allgemein die Übertragung von Daten zwischen Endgeräten und insbesondere ein Verfahren zur Datensynchronisation sowie ein entsprechendes mobiles Telekommunikationsendgerät.

Mobile Telekommunikationsendgeräte wie zum Beispiel PDA's (Personal Digital Assistant) oder Smartphones verfügen zunehmend über Funktionen zum Informationsmanagement, wie beispielsweise E-mail-, Terminkalender- oder Addressbuch-Funktionen. Der Benutzer eines solchen mobilen Endgerätes verwendet diese Funktionen häufig auch parallel auf einem Computer, der gegebenenfalls auf eine zentrale Verwaltungsinstanz innerhalb eines LANs (Local Area Network) zugreift.

Zweckmäßigerweise werden korrespondierende Applikationen auf dem mobilen Endgerät und dem Computer eingesetzt, welche das gleiche Datenformat für sogenannte PIM-Daten (Personal Information Management-Daten), wie zum Beispiel E-mails, Kalendereinträge oder Kontakte, verwenden und über ein definiertes Protokoll PIM-Daten austauschen können. Da sowohl auf dem mobilen Endgerät als auch auf dem Computer eine Änderung der Daten vorgenommen werden kann, ist typischerweise ein Datenabgleich erforderlich, durch den die Daten synchronisiert werden. Dabei werden die Daten unter den Geräten ausgetauscht, so dass jedes Gerät jeweils aktualisierte Daten erhält. Die Synchronisation kann drahtgebunden, zum Beispiel über USB, oder drahtlos mittels Infrarot, Bluetooth oder WLAN erfolgen.

Aus EP 0917 077 A2 ist ein Verfahren zur drahtlosen Synchronisation einer Datendatei auf einem PDA mit einer Datendatei auf einem PC bekannt, wobei insbesondere bei jeder Aktualisierung oder Änderung einer der Datendateien eine Synchronisation erfolgt. Zur Reduzierung der Modemaktivität kann vorgesehen sein, eine Synchronisation nach einer vorgegebenen Anzahl von Änderungen der Datendateien, nach einer vorgegebenen Aktivitätsdauer oder bei Verlassen eines Terminplanungsprogramms durchzuführen. Alternativ kann auch ein manuelles Auslösen der Synchronisation vorgesehen sein.

Aus WO 00/20994 A1 ist ferner ein System und ein Verfahren zur Synchronisation einer Datenbank mit PIM-Daten in einem Netzwerk bekannt, wobei ausführbarer Applikationscode, beispielsweise in Form eines Java-Applets, von einem globalen Server heruntergeladen und auf einem Client ausgeführt wird.

Zur Synchronisation von PIM-Daten zwischen einem Groupwaresystem wie beispielsweise Microsoft Exchange oder Lotus Notes und einem mobilen Endgerät wie beispielsweise einem PDA können am Markt verfügbare Standardprodukte eingesetzt werden. Die Übertragung derartiger Informationen über Mobilfunkstrecken wie etwa GPRS oder UMTS ist jedoch mit Hinblick auf Sicherheit ein kritischer Aspekt.

US 2006/089121 A1 beschreibt ein Verfahren und eine Vorrichtung zum automatischen Verbinden eines VPN-Client mit einem Netzwerk über einen VPN-Tunnel, wobei zum Zweck der Authentifizierung auf zwischengespeicherte Benutzerdaten zugegriffen wird. Bei Verlust der Verbindung wird der VPN-Tunnel automatisch wieder aufgebaut, so dass bestimmte Applikationen wie beispielsweise E-mail- oder Kalender-Clients verbunden und synchronisiert bleiben.

Der vorliegenden Erfindung liegt die Aufgabe zugrunde, einen verbesserten Weg aufzuzeigen, wie auf einem Telekommunikationsendgerät hinterlegte Daten mit entsprechenden, auf einem Computer hinterlegten Daten synchronisiert werden können.

Diese Aufgabe wird durch ein Verfahren gemäß Anspruch 1, ein Telekommunikationsendgerät nach Anspruch 6, sowie ein digitales Speichermedium nach Anspruch 11 gelöst. Vorteilhafte Ausführungsformen und Weiterbildungen sind in den jeweiligen Unteransprüchen umschrieben.

Dementsprechend umfasst ein erfindungsgemäßes Verfahren zur Datensynchronisation zwischen einem mobilen Telekommunikationsendgerät und einem Computer das Aufbauen einer VPN-Verbindung zu dem Computer durch das mobile Telekommunikationsendgerät und das Synchronisieren eines auf dem mobilen Telekommunikationsendgerät hinterlegten, ersten Datenbestands und eines auf dem Computer hinterlegten, dem Benutzer des mobilen Telekommunikationsendgerätes zugeordneten zweiten Datenbestands über die VPN-Verbindung.

Der erste und zweite Datenbestand umfasst typischerweise Daten einer persönlichen Informationsmanagement-Anwendung, sogenannte PIM-Daten, auf die durch den Benutzer in ähnlicher Weise über das mobile Telekommunikationsendgerät bzw. über den Computer zugegriffen werden kann.

Zum Zweck der Datensynchronisation findet ein Datenabgleich statt, wobei persönliche Daten des Benutzers zwischen dem mobilen Telekommunikationsendgerät und dem Computer ausgetauscht werden. Um einen Missbrauch zu verhindern, wird vorzugsweise eine Authentifizierung des Benutzers durchgeführt. Demzufolge umfasst das Verfahren vorteilhaft die Schritte des Auslesens hinterlegter Benutzerdaten aus einem Speicher des mobilen Telekommunikationsendgerätes, des Übertragens der Benutzerdaten über die VPN-Verbindung zu dem Computer, und des Authentifizierens des Benutzers des mobilen Telekommunikationsendgerätes auf dem Computer in Abhängigkeit der empfangenen Benutzerdaten, wobei die Benutzerdaten vorzugsweise verschlüsselt in dem Speicher hinterlegt werden.

Die Schritte des Aufbauens der VPN-Verbindung und des Synchronisierens des ersten und zweiten Datenbestands werden automatisch ausgeführt. Dies erfolgt automatisch in vorgegebenen Zeitabständen. Es kann auch beispielsweise in Antwort auf eine einmalige manuelle Benutzereingabe an dem mobilen Telekommunikationsendgerät erfolgen.

Da der Benutzer vorteilhaft die Möglichkeit besitzt, auch zu anderen Zwecken als einer Datensynchronisation eine VPN-Verbindung zu dem Computer aufzubauen, überprüft das mobile Telekommunikationsendgerät vor Aufbauen der VPN-Verbindung, ob bereits eine Datenverbindung zu dem Computer besteht und baut die VPN-Verbindung nur bei nicht bereits bestehender Datenverbindung auf. Die Überprüfung auf Vorhandensein einer bestehenden Datenverbindung kann vorteilhaft das Detektieren einer drahtgebundenen und/oder einer drahtlosen Datenverbindung umfassen, da vorgesehen sein kann, das mobile Telekommunikationsendgerät neben einer VPN-Verbindung über das Internet auch auf verschiedene andere Weisen mit dem Computer zu verbinden, beispielsweise drahtgebunden über USB oder drahtlos über Infrarot oder Bluetooth.

Ein erfindungsgemäßes mobiles Telekommunikationsendgerät umfasst eine Einrichtung zum Aufbauen einer VPN-Verbindung zu wenigstens einem vorgegebenen Computer, einen ersten Speicher zum Speichern eines ersten Datenbestands, und eine Synchronisier-Einrichtung zum Synchronisieren des ersten Datenbestands mit einem zugeordneten, auf dem vorgegebenen Computer hinterlegten Datenbestand über eine zu dem Computer aufgebaute VPN-Verbindung. Für Authentifizierungszwecke ist vorzugsweise ein zweiter Speicher mit hinterlegten Benutzerdaten vorgesehen, wobei diese vorteilhaft in verschlüsselter Form hinterlegt sind.

Das Endgerät ist dazu ausgebildet, automatisch in vorgegeben Zeitabständen wiederholt eine VPN-Verbindung zu dem vorgegebenen Computer aufzubauen und den ersten und zweiten Datenbestand zu synchronisieren, wobei zu diesem Zweck vorteilhaft ein durch den Benutzer einstellbarer Timer vorgesehen ist. Ferner umfasst das Endgerät eine Einrichtung zur Überprüfung, ob bereits eine Datenverbindung zu dem Computer besteht, vorzugsweise eine Einrichtung zur Überprüfung, ob bereits eine drahtgebundene und/oder eine drahtlose Datenverbindung zu dem Computer besteht.

Zur Ausführung des erfindungsgemäßen Verfahrens werden vorzugsweise Softwarekomponenten zum Aufbau einer sicheren Internetverbindung mittels einer VPN-Verbindung sowie zur Synchronisation der PIM-Daten eingesetzt. Dementsprechend liegt auch ein digitales Speichermedium mit darauf gespeichertem Programm im Rahmen der Erfindung, welches zur Steuerung eines mobilen Telekommunikationsendgerätes zur Durchführung des beschriebenen Verfahrens ausgebildet ist.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: ein über ein USB-Kabel mit einem Computer verbundenes Telekommunikationsendgerät,
- Fig. 2:: eine bevorzugte Ausführungsform eines erfindungsgemäßen Telekommunikationsendgerätes, welches dazu ausgebildet ist, zur Datensynchronisation automatisch eine VPN-Verbindung über das Internet zu einem Computer aufzubauen, und
- Fig. 3:: ein schematisches Ablaufdiagramm einer bevorzugten Ausführungsform des erfindungsgemäßen Verfahrens.

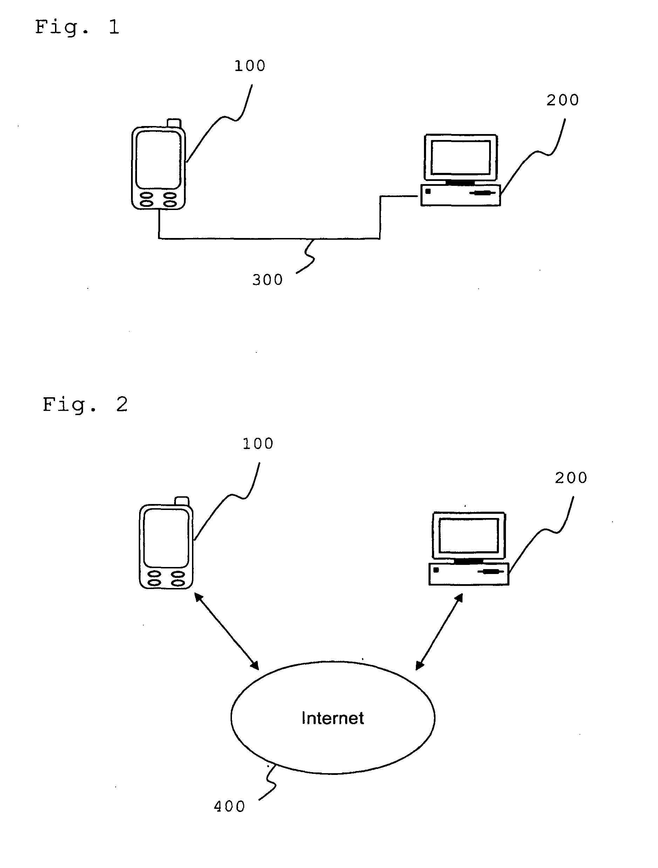

Ein erfindungsgemäßes Telekommunikationsendgerät in Form eines PDA 100 ist in den Figuren 1 und 2 dargestellt. Auf dem PDA 100 ist ein erster Datenbestand mit PIM-Daten hinterlegt, auf die mit einer entsprechenden Softwareapplikation zugegriffen werden kann. Ein zweiter Datenbestand mit PIM-Daten ist auf dem Computer 200 hinterlegt, welcher in ein nicht dargestelltes LAN eingebunden sein kann. Auf dem Computer steht ebenfalls eine Softwareapplikation zur Verfügung, um auf den zweiten Datenbestand zuzugreifen. Ferner umfassen das PDA 100 und der Computer 200 jeweils eine Softwarekomponente zur Datensynchronisation, wobei diese dazu ausgebildet sind, durch wechselseitige Übertragung geänderter PIM-Daten einen Datenabgleich zwischen dem ersten und zweiten Datenbestand zu bewirken.

Die für die Datensynchronisation erforderliche Datenverbindung zwischen PDA 100 und Computer 200 kann, wie in Fig. 1 dargestellt, beispielsweise mittels einer direkten USB-Verbindung 300 bereitgestellt werden. Eine solche Datenverbindung ist sicher gegen Datenzugriffe durch Dritte, jedoch kann nur dann eine Datensynchronisation durchgeführt werden, wenn der Benutzer des PDAs sich in unmittelbarer Nähe zu dem Computer 200 befindet.

Um auch dann eine sichere Datensynchronisation durchführen zu können, wenn der Benutzer des PDAs unterwegs ist, ist das PDA 100, wie in Fig. 2 dargestellt, dazu ausgebildet, über das Internet 400 eine VPN-Verbindung zu dem Computer 200 aufzubauen. Durch das Übertragen der Daten über ein virtuelles privates Netz (VPN = Virtual Private Network) ist die Verbindung abgesichert und ein Zugriff durch Dritte erschwert. Vorzugsweise werden die über die VPN-Verbindung übertragenen Daten zusätzlich verschlüsselt.

Zu diesem Zweck umfasst das PDA 100 vorzugsweise eine erste Softwarekomponente zum Aufbau der sicheren Internetverbindung mittels einer VPN-Verbindung und eine zweite Softwarekomponente zur Synchronisation der PIM-Datenbestände. Diese Softwarekomponenten sind vorteilhaft dazu ausgebildet, unabhängig voneinander zu arbeiten, so dass der Benutzer beispielsweise auch für andere Zwecke als zur Datensynchronisation eine VPN-Verbidnung aufbauen kann. Eine als Steuereinheit ausgebildete Softwarekomponente stellt die Beziehung zwischen der ersten und zweiten Softwarekomponente her und integriert diese Komponenten. Die Steuereinheit dient ferner dazu, bestimmte Funktionsabläufe, insbesondere das Aufbauen einer VPN-Verbindung zu dem Computer 200 und eine nachfolgende Datensynchronisation zu automatisieren. Besonders vorteilhaft ermöglicht die als Steuereinheit ausgebildete Softwarekomponente die automatisierten Vorgänge einerseits manuell und andererseits zeitgesteuert und ohne weitere Interaktion des Anwenders auszulösen.

Um die PIM-Datensynchronisation korrekt durchführen zu können, ist die Steuereinheit vorzugsweise dazu ausgebildet, beispielsweise basierend auf dem Betriebssystem Microsoft Windows Mobile festzustellen, ob das Endgerät 100 über eine geeignete Verbindung wie zum Beispiel USB oder serielles Kabel, mit dem Computer 200 verbunden ist und somit ein direkter Zugriff auf die Serverkomponente der Synchronisationssoftware möglich ist. Ist dies nicht der Fall, so baut die Steuereinheit zunächst einen VPN-Tunnel zu dem Computer 200 auf, bzw. überprüft, ob diese VPN-Verbindung bereits besteht. Nach erfolgreicher Herstellung der VPN-Verbindung wird der Synchronisations-Client angestoßen, um die eigentliche Synchronisation der PIM-Daten auszulösen. Damit der Synchronisations-Client wiederum sich erfolgreich an dem Postfach des Anwenders anmelden kann, müssen hierbei dem Client die Anmeldeinformationen des Anwenders als Parameter übergeben werden. Diese wurden im Rahmen der Inbetriebnahme in einer verschlüsselten Datei auf dem Endgerät abgelegt, von wo sie bei Bedarf ausgelesen und an den Synchronisations-Client übergeben werden.

Neben der manuell ausgelösten Synchronisation, d. h. Abarbeiten der vorgenannten Schritte, durch Drücken eines Knopfes an dem Gerät, bzw. durch Anklicken eines entsprechenden Icons auf der Benutzeroberfläche, kann dieser Vorgang auch in einstellbaren Zeitintervallen ausgelöst werden. Hierzu ist eine entsprechende Eingabemaske vorgesehen, die es dem Anwender erlaubt, seine bevorzugten Einstellungen zu übernehmen.

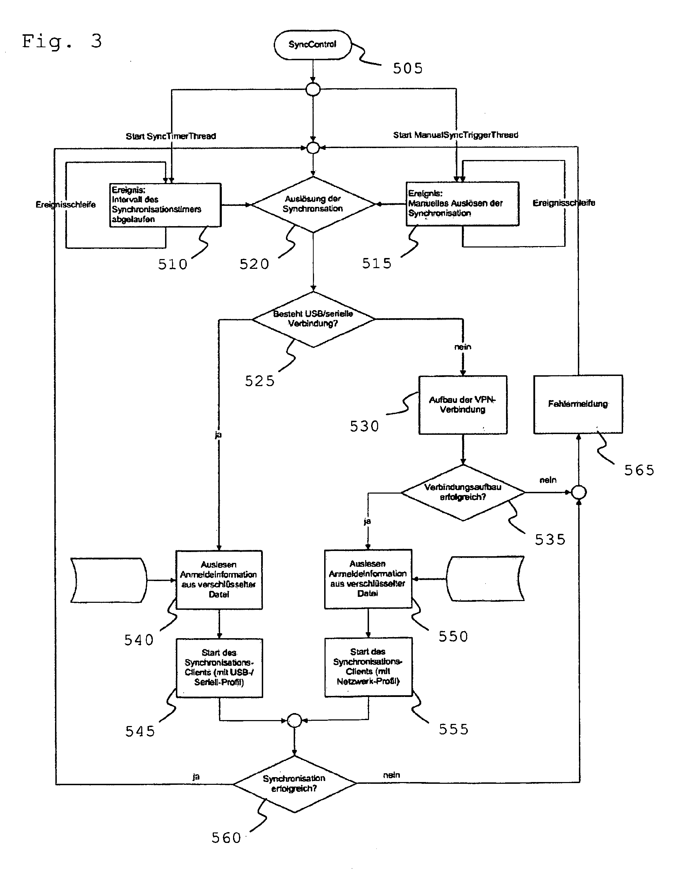

Fig. 3 zeigt beispielhaft ein schematisches Ablaufschema einer bevorzugten Ausführungsform des beschriebenen Verfahrens. Nach Starten 505 einer auf dem PDA 100 hinterlegten Applikation, welche die oben beschriebene, als Steuereinheit ausgebildete Softwarekomponente umfasst, wird der Synchronisationsprozess initiiert 520. Gleichzeitig wird jeweils ein Prozess zum manuellen Auslösen 515 des Synchronisationsprozess, sowie zum zeitgesteuerten Auslösen 510 des Synchronisationsprozess gestartet. Nach Auslösen 520 des Synchronisationsprozess wird geprüft 525, ob eine serielle Verbindung, beispielsweise über USB, besteht.

Besteht eine serielle Verbindung, so werden Anmeldeinformationen aus einer verschlüsselten, auf dem PDA 100 hinterlegten Datei ausgelesen 540 und der Synchronisations-Client mit einem auf die bestehende serielle Datenverbindung ausgerichteten Profil gestartet 545.

Besteht keine serielle Verbindung, so wird zunächst eine sichere VPN-Verbindung zu dem Computer 200 über das Internet 400 aufgebaut 530 und überprüft, ob der Aufbau der VPN-Verbindung erfolgreich war 535. Bei erfolgreichen VPN-Verbindungsaufbau werden Anmeldeinformationen aus der verschlüsselten, auf dem PDA 100 hinterlegten Datei ausgelesen 550 und der Synchronisations-Client mit einem auf die VPN-Datenverbindung ausgerichteten Profil gestartet 555. Abschließend wird geprüft, ob die Datensynchronisation erfolgreich war 560. Bei nicht erfolgreicher Datensynchronisation oder einem nicht erfolgreichen Aufbau der VPN-Verbindung wird eine Fehlermeldung ausgegeben 565.

## Patentansprüche

1. Verfahren zur Datensynchronisation zwischen einem mobilen Telekommunikationsendgerät (100) und einem Computer (200), umfassend die Schritte:
- Aufbauen (530) einer VPN-Verbindung zu dem Computer (200) durch das mobile Telekommunikationsendgerät (100), und
- Synchronisieren (555) eines auf dem mobilen Telekommunikationsendgerät (100) hinterlegten, ersten Datenbestands und eines auf dem Computer (200) hinterlegten, dem Benutzer des mobilen Telekommunikationsendgerätes (100) zugeordneten zweiten Datenbestands über die VPN-Verbindung, **dadurch gekennzeichnet, dass**
das Aufbauen der VPN-Verbindung und das Synchronisieren des ersten und zweiten Datenbestands automatisch in vorgegebenen Zeitabständen wiederholt wird (510, 520), wobei vor Aufbauen der VPN-Verbindung durch das mobile Telekommunikationsendgerät (100) überprüft wird (525), ob bereits eine Datenverbindung zu dem Computer (200) besteht und nur bei nicht bereits bestehender Datenverbindung die VPN-Verbindung aufgebaut wird.

2. Verfahren nach Anspruch 1, ferner umfassend die Schritte:
- Auslesen (550) hinterlegter Benutzerdaten aus einem Speicher des mobilen Telekommunikationsendgerätes (100),
- Übertragen der Benutzerdaten über die VPN-Verbindung zu dem Computer, und
- Authentifizieren des Benutzers des mobilen Telekommunikationsendgerätes (100) auf dem Computer (200) in Abhängigkeit der empfangenen Benutzerdaten.

3. Verfahren nach Anspruch 2, wobei die Benutzerdaten verschlüsselt in dem Speicher des mobilen Telekommunikationsendgerätes (100) hinterlegt werden.

4. Verfahren nach einem der vorstehenden Ansprüche, wobei das Überprüfen das Detektieren einer drahtgebundenen und/oder einer drahtlosen Datenverbindung umfasst.

5. Verfahren nach einem der vorstehenden Ansprüche, wobei der erste und zweite Datenbestand Daten einer persönlichen Informationsmanagement-Anwendung umfassen.

6. Mobiles Telekommunikationsendgerät (100), umfassend
- eine Einrichtung zum Aufbauen (530) einer VPN-Verbindung zu wenigstens einem vorgegebenen Computer (200),
- einen ersten Speicher zum Speichern eines ersten Datenbestands, und
- eine Synchronisier-Einrichtung zum Synchronisieren (555) des ersten Datenbestands mit einem zugeordneten, auf dem vorgegebenen Computer (200) hinterlegten Datenbestand über eine zu dem Computer (200) aufgebaute VPN-Verbindung, **dadurch gekennzeichnet, dass**
das mobile Telekommunikationsendgerät dazu ausgebildet ist, automatisch in vorgegeben Zeitabständen wiederholt eine VPN-Verbindung zu dem vorgegebenen Computer (200) aufzubauen und den ersten und zweiten Datenbestand zu synchronisieren, und dass das mobile Telekommunikationsendgerät zur Überprüfung, ob bereits eine Datenverbindung zu dem Computer (200) besteht, ausgebildet ist.

7. Endgerät nach Anspruch 6, ferner umfassend einen zweiten Speicher mit hinterlegten Benutzerdaten, wobei die Synchronisier-Einrichtung dazu ausgebildet ist, für eine Authentifizierung des Benutzers die im zweiten Speicher hinterlegten Benutzerdaten über die VPN-Verbindung zu dem vorgegebenen Computer (200) zu übertragen.

8. Endgerät nach Anspruch 7, wobei der zweite Speicher dazu ausgebildet ist, Daten in verschlüsselter Form zu speichern.

9. Endgerät nach einem der Ansprüche 6 bis 8, wobei die Überprüfung das Detektieren einer drahtgebundenen und/oder einer drahtlosen Datenverbindung umfasst.

10. Endgerät nach einem der Ansprüche 6 bis 9, wobei der erste und zweite Datenbestand Daten einer persönlichen Informationsmanagement-Anwendung umfassen.

11. Digitales Speichermedium mit darauf gespeichertem Programm, ausgebildet zur Steuerung eines mobilen Telekommunikationsendgerätes (100) zur Durchführung eines Verfahrens nach einem der Ansprüche 1 bis 5.

## Claims

1. A method for data synchronization between a mobile telecommunications terminal (100) and a computer (200), comprising the steps of:
- establishing (530) a VPN connection to the computer (200) by the mobile telecommunications terminal (100); and
- synchronizing (555), via the VPN connection, a first dataset stored in the mobile telecommunications terminal (100) and a second dataset associated with the user of the mobile telecommunications terminal (100) and stored in the computer (200);
**characterized in that**
the establishing of the VPN connection and the synchronizing of the first and second datasets is automatically repeated at predetermined time intervals (510, 520), wherein before establishing the VPN connection by the mobile telecommunications terminal (100) it is checked (525) whether an established data connection to the computer (200) is already existing and the VPN connection is only established if there is no data connection existing yet.

2. The method according to claim 1, further comprising the steps of:
- reading (550) stored user data from a memory of the mobile telecommunications terminal (100);
- transmitting the user data via the VPN connection to the computer; and
- authenticating the user of the mobile telecommunications terminal (100) on the computer (200) in response to the received user data.

3. The method according to claim 2, wherein the user data is stored in encrypted form in the memory of the mobile telecommunications terminal (100).

4. The method according to any of the preceding claims,
wherein the checking comprises detecting a wired and/or a wireless data connection.

5. The method according to any of the preceding claims,
wherein the first and second datasets comprise data of a personal information management application.

6. A mobile telecommunications terminal (100), comprising:
- means for establishing (530) a VPN connection to at least one predetermined computer (200);
- a first memory for storing a first dataset; and
- synchronizing means for synchronizing (555) the first dataset with an associated dataset stored in the predetermined computer (200) via a VPN connection established to the computer (200);
**characterized in that**
the mobile telecommunications terminal is adapted to repeatedly automatically establish a VPN connection to the predetermined computer (200) at predetermined time intervals and to synchronize the first and second datasets, and that the mobile telecommunications terminal is adapted to check whether a data connection to the computer (200) is already existing.

7. The terminal according to claim 6, further comprising a second memory with user data stored therein, wherein the synchronizing means is adapted to transmit the user data stored in the second memory to the predetermined computer (200), via the VPN connection, for authentication of the user.

8. The terminal according to claim 7, wherein the second memory is adapted to store data in encrypted form.

9. The terminal according to any of claims 6 to 8, wherein the checking comprises detecting a wired and/or a wireless data connection.

10. The terminal according to any of claims 6 to 9, wherein the first and second datasets comprise data of a personal information management application.

11. A digital storage medium having a program stored thereon, adapted to control a mobile telecommunications terminal (100) for performing a method according to any of claims 1 to 5.

## Revendications

1. Procédé de synchronisation de données entre un terminal de télécommunication mobile (100) et un ordinateur (200), comprenant les étapes suivantes :
- établissement (530) d'une connexion VPN avec l'ordinateur (200) par le terminal de télécommunication mobile (100), et
- synchronisation (555) d'un premier stock de données présent sur le terminal de télécommunication mobile (100), et d'un deuxième stock de données présent sur l'ordinateur (200) associé à l'utilisateur du terminal de télécommunication mobile (100) via la connexion VPN,
**caractérisé en ce que** :
l'établissement de la connexion VPN et la synchronisation des premier et deuxième stocks de données sont automatiquement répétés à intervalles temporels définis (510, 520), la préexistence d'une liaison de données avec l'ordinateur (200) étant contrôlée (525) avant l'établissement de la connexion VPN par le terminal de télécommunication mobile (100), la connexion VPN n'étant établie que si aucune liaison de données n'est préexistante.

2. Procédé selon la revendication 1, comprenant en outre les étapes suivantes :
- extraction (550) des données d'utilisateur stockées dans une mémoire du terminal de télécommunication mobile (100),
- transmission des données d'utilisateur à l'ordinateur via la connexion VPN, et
- authentification de l'utilisateur du terminal de télécommunication mobile (100) sur l'ordinateur (200) en fonction des données d'utilisateur reçues.

3. Procédé selon la revendication 2, dans lequel les données d'utilisateur sont stockées sous forme codée dans la mémoire du terminal de télécommunication mobile (100).

4. Procédé selon l'une des revendications précédentes, dans lequel le contrôle inclut la détection d'une liaison de données filaire et/ou d'une liaison de données sans fil.

5. Procédé selon l'une des revendications précédentes, dans lequel les premier et deuxième stocks de données comprennent des données d'une application de gestion d'informations personnelle.

6. Terminal de télécommunication mobile (100), comprenant :
- un dispositif pour l'établissement (530) d'une connexion VPN avec au moins un ordinateur (200) donné,
- une première mémoire pour la mémorisation d'un premier stock de données, et
- un dispositif de synchronisation pour la synchronisation (555) du premier stock de données avec un stock de données associé mémorisé sur l'ordinateur (200) donné via une connexion VPN établie avec l'ordinateur (200),
ledit terminal de télécommunication mobile étant **caractérisé en ce qu'**il est prévu pour établir automatiquement, de manière répétée à intervalles temporels définis, une connexion VPN avec l'ordinateur (200) donné, et pour synchroniser les premier et deuxième stocks de données, et **en ce qu'**il est prévu pour contrôler si une liaison de données est préexistante avec l'ordinateur (200).

7. Terminal selon la revendication 6, comprenant en outre une deuxième mémoire avec des données d'utilisateur stockées, le dispositif de synchronisation étant prévu pour transmettre à l'ordinateur (200) donné les données d'utilisateur stockées dans la deuxième mémoire via la connexion VPN, pour une authentification de l'utilisateur.

8. Terminal selon la revendication 7, dans lequel la deuxième mémoire est prévue pour mémoriser les données sous forme codée.

9. Terminal selon l'une des revendications 6 à 8, dans lequel le contrôle inclut la détection d'une liaison de données filaire et/ou d'une liaison de données sans fil.

10. Terminal selon l'une des revendications 6 à 9, dans lequel les premier et deuxième stocks de données comprennent des données d'une application de gestion d'informations personnelle.

11. Support de stockage numérique présentant un programme mémorisé, prévu pour la commande d'un terminal de télécommunication mobile (100) pour l'exécution d'un procédé selon l'une des revendications 1 à 5.
